# EUROPEAN PATENT SPECIFICATION

(11) **EP 4 171 899 B1**
(45) Date of publication and mention of the grant of the patent: **09.04.2025**
(21) Application number: 21759184.1
(22) Date of filing: 23.06.2021
(51) Int. Cl.: B25J 15/06

(54) **PASSIVE VALVES FOR VACUUM MANIFOLDS**
PASSIVE VENTILE FÜR VAKUUMVERTEILER
VANNES PASSIVES POUR COLLECTEURS À VIDE

(30) Priority: 26.06.2020 US 202063044519 P
(43) Date of publication of application: 03.05.2023
(73) Proprietor: Cryovac, LLC, Charlotte, NC 28208 (US)
(72) Inventor: DALEY, Bradley Neal, Huntersville, North Carolina 28078 (US); ANDERSON, Roger Jeffrey, Mooresville, North Carolina 28117 (US)
(74) Representative: Uexküll & Stolberg
(86) International application number: PCT/US2021/038569
(87) International publication number: WO 2021/262782

(56) References cited:
- JP-A- 2003 004 154
- JP-A- H0 699 386
- JP-A- H08 174 462
- JP-U- S5 555 389

## Description

### BACKGROUND

The present disclosure is in the technical field of vacuum manifolds which include a vacuum chamber and a port, and a valve in-between. More particularly, the present disclosure is directed to vacuum manifolds where the valves are biased closed and passively open when an object engages the vacuum ports.

Vacuum end-of-arm tools can be used on robotic arms for many functions, including gripping and moving objects. For example, a vacuum tool may have one or more suction cups that come in contact with an object. A vacuum can be drawn in the suction cup(s) to exert a force on the object. To maximize the force of the vacuum tool on the object, all of the suction cups in which the vacuum is drawn must be in contact with the object. Even one suction cup not being in contact with the object can reduce the strength of the force of the vacuum tool on the object to the point that the vacuum tool cannot grip the object sufficiently to move the object. Using a vacuum tool to grip objects of different shapes can be difficult. The different shapes of the objects can prevent all suction cups of the vacuum tool from contacting the object.

JP H06 99386 discloses a vacuum chamber and a valve, the valve being located between the vacuum chamber and a port and being configured to passively couple the vacuum chamber to the port when the port is engaged by an object. The valve comprises: a moving component having a first end and a second end opposite to the first end, wherein the moving component is movable between a closed position and an open position; a bleed orifice that is exposed to the vacuum chamber when the moving component is in the closed position; and wherein, when the moving component is in the closed position, the first end of the moving component is in contact with an inner wall of the vacuum chamber to deter movement of gas into and out of the port; wherein, when the moving component is in the open position, the first end of the moving component is not in contact with the inner wall of the vacuum chamber; wherein the bleed orifice permits gas to pass such that, when a vacuum is drawn in the vacuum chamber and the port is engaged by an object, a pressure on the second end of the moving component is reduced to overcome a force of the vacuum chamber and cause the moving component to passively move from the closed position to the open position. Similar vacuum manifolds including a vacuum chamber and a valve are described in JP 2003 004154 A, JP H08 174462 A, and in JP S55 55389 U.

It is possible to overcome the lack of contact between an object and some of the vacuum cups on vacuum tool. For example, a separate vacuum source can be coupled to each of the suction cups so that the lack of contact between one of the suction cups and the object does not affect the operation of the other suction cups. However, having multiple vacuum sources for a single vacuum tool can be expensive. In another example, each of the suction cups can be coupled to a single vacuum source in parallel with a valve for each suction cup. In this example, the valves can be independently controlled (e.g., by a controller) to open each valve when the corresponding suction cup contacts the object. However, having active control of the valves and sensors to detect contact between each suction cup and the object can be complex and expensive.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In a first embodiment, a vacuum manifold comprises a vacuum chamber and a valve located between the vacuum chamber and a port and configured to passively couple the vacuum chamber to the port when the port is engaged by an object. The valve includes a moving component, a channel, a bleed orifice, and a biasing mechanism. The moving component has a first end and a second end opposite the first end and the moving component is movable between a closed position and an open position. The channel extends through the moving component between the first and second ends. The bleed orifice extends through the moving component between the channel and a side of the moving component that is exposed to the vacuum chamber when the moving component is in the closed position. The biasing mechanism is configured to bias the moving component to the closed position. When the moving component is in the closed position, the first end of the moving component is in contact with an inner wall of the vacuum chamber to deter movement of gas into and out of the channel at the first end. When the moving component is in the open position, the first end of the moving component is not in contact with the inner wall of the vacuum chamber. The bleed orifice permits gas to pass such that, when a vacuum is drawn in the vacuum chamber and the port is engaged by an object, a pressure on the second end of the moving component is reduced to overcome a force of the biasing mechanism and cause the moving component to passively move from the closed position to the open position.

In a second embodiment, one or more dimensions of the bleed orifice of the first embodiment are selected based on a predetermined flow rate of gas permitted to pass through the bleed orifice when the moving component is in the closed position.

In a third embodiment, the channel of any one of the preceding embodiments extends in a direction that is substantially perpendicular to a direction in which the bleed orifice extends.

In a fourth embodiment, the bleed orifice of any one of the preceding embodiments includes at least one of a notch in the first end of the moving component and a through hole in the moving component.

In a fifth embodiment, the moving component of any one of the preceding embodiments is cylindrical in shape and the channel is a through hole in the moving component.

In a sixth embodiment, the cylindrical shape of the moving component of the fifth embodiment has a stepped-diameter profile such that a first portion of the moving component that includes the first end has a first diameter, a second portion of the moving component that includes the second end has a second diameter, and the first diameter is smaller than the second diameter.

In a seventh embodiment, the second portion of the moving component of the sixth embodiment includes a third end opposite the second end, and wherein the third end is exposed to an ambient environment, optionally wherein
the third end has a trough that extends around the first portion of the moving component, and wherein the trough is communicatively coupled to the ambient environment via a reference channel.

In an eighth embodiment, the moving component of any one of the sixth to seventh embodiments is configured to be located within a portion of the vacuum manifold that includes a first bore and a second bore with the first portion of the moving component located in the first bore and the second portion of the moving component located in the second bore, wherein the first diameter is selected to limit passage of gas between the first portion of the moving component and the first bore, and wherein the second diameter is selected to limit passage of gas between the second portion of the moving component and the second bore.

In a ninth embodiment, the biasing mechanism of any one of the preceding embodiments includes a compression spring positioned between the port and the second end of the moving component.

In a tenth embodiment, a cross-sectional area of the channel of any one of the preceding embodiments is less than a cross-sectional area of a gas passageway in the port, optionally wherein
, when an engagement component is coupled to the port of the eleventh embodiment and the engagement component has a gas passageway, the cross-sectional area of the channel is less than a cross-sectional area of the gas passageway of the engagement component.

In an eleventh embodiment, when the object is disengaged from the port of any one of the preceding embodiments, the biasing mechanism is configured to move the moving component from the open position to the closed position.

In a twelfth embodiment, the vacuum manifold of any of the preceding embodiments comprises a plurality of ports, and a plurality of valves. The plurality of ports are coupled in parallel to the vacuum chamber and the plurality of ports are exposed to the ambient atmosphere. Each of the plurality of valves is located between the vacuum chamber and one of the plurality of ports. The plurality of valves are configured to move between the open and closed positions independently of each other.

In a thirteenth embodiment, one or more dimensions of the bleed orifices of the plurality of valves of the twelfth embodiment are selected based on a number of the plurality of valves; optionally wherein
the vacuum manifold further includes a plurality of suction cups, each of which is coupled to one of the plurality of ports, optionally wherein
the plurality of suction cups are integrally formed with the plurality of ports.

In a fourteenth embodiment, for each of the plurality of valves, a cross-sectional area of the channel of any of the twelfth to thirteenth embodiments is less than a cross-sectional area of a gas passageway in a corresponding port of the plurality of ports.

In a fifteenth embodiment, the vacuum manifold of any of the twelfth to fourteenth embodiments is coupled to a vacuum source configured to draw the vacuum in the vacuum chamber.

### BRIEF DESCRIPTION OF THE DRAWING

The foregoing aspects and many of the attendant advantages of the disclosed subject matter will become more readily appreciated as the same become better understood by reference to the following detailed description, when taken in conjunction with the accompanying drawings, wherein:
Figs. 1A, 1B, 1C, and 1D depict top, side, bottom, and side cross-sectional views, respectively, of a vacuum manifold, in accordance with the embodiments disclosed herein;
Fig. 1E depicts a cross-sectional view of the vacuum manifold shown in Figs. 1A-1D when a vacuum is being drawn in the vacuum manifold, in accordance with the embodiments disclosed herein;
Figs. 2A and 2B depict perspective and side views, respectively, of an embodiment of a moving component of the valves in the vacuum manifold shown in Figs. 1A-1D, in accordance with the embodiments disclosed herein;
Figs. 3A and 3B depict perspective and side views, respectively, of an another embodiment of a moving component usable in the valves in the vacuum manifold shown in Figs. 1A-1D, in accordance with the embodiments disclosed herein;
Figs. 4A to 4H depict partial cross-sectional views the vacuum manifold shown in Figs. 1A-1D, and each of Figs. 4A to 4H shows an instance of a valve 118 opening and closing passively, in accordance with the embodiments disclosed herein;
Figs. 5A and 5B depict perspective views of the moving component shown in Figs. 2A and 2B and a cross-section of the vacuum manifold shown in Figs. 1A-1D in the closed and open positions, respectively, in accordance with the embodiments disclosed herein;
Figs. 6A and 6B depict an embodiment of the vacuum manifold shown in Figs. 1A-1D and an object engaging some, but not all, of the ports, in accordance with the embodiments disclosed herein; and
Figs. 7A and 7B depict side and bottom views, respectively, of an embodiment of the vacuum manifold shown in Figs. 1A-1D having engagement components, in accordance with the embodiments disclosed herein.

### DETAILED DESCRIPTION

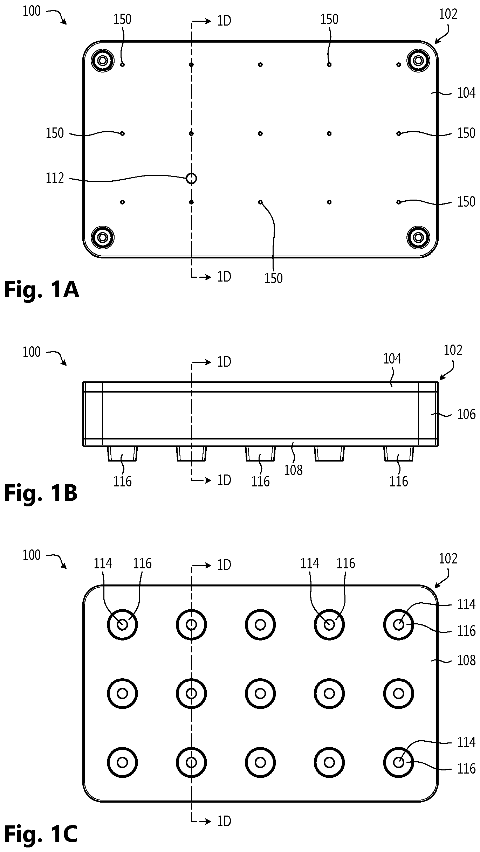

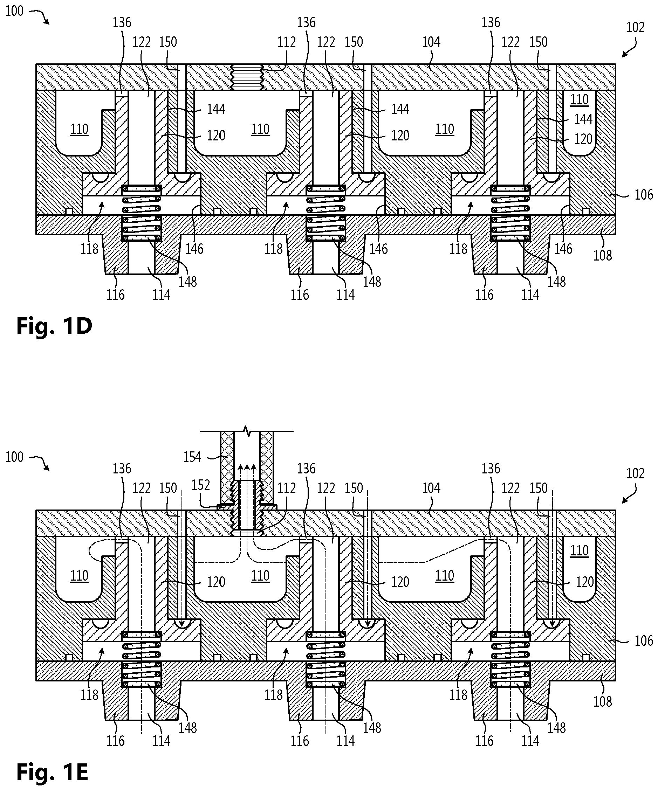

Figs. 1A, 1B, 1C, and 1D depict top, side, bottom, and side cross-sectional views, respectively, of a vacuum manifold 100. In the depicted embodiment, the vacuum manifold 100 includes a body 102. In the depicted embodiment, the body 102 includes a top component 104, a middle component 106, and a lower component 108 that are coupled to each other. In other embodiments, the body 102 can be formed from a single component or from any number of components. The vacuum manifold 100 includes a vacuum chamber 110. In the depicted embodiment, the vacuum chamber 110 is bounded by the top component 104 and the middle component 106 of the body 102. The top component 104 includes a vacuum port 112 that is in fluid communication with the vacuum chamber 110. The vacuum port 112 is configured to be coupled to a vacuum source that is capable of drawing a vacuum in the vacuum chamber 110.

The vacuum manifold 100 includes a number of ports 114. In some embodiments, the ports 114 pass through the lower component 108 of the body. In the depicted embodiment, the lower component 108 includes protrusions 116 that extend from the lower surface and the ports 114 pass through the protrusions 116. In some embodiments, the protrusions 116 are formed from a compliant material (e.g., rubber) that tends to comply with objects so that the objects are likely to engage the ports 114 when the objects contact the protrusions 116. As can be seen in Fig. 1C, the depicted embodiment of ports 114 includes a three-by-five array of ports. It will be appreciated that, in other embodiments, the ports 114 could have any number and/or be arranged in any other way (e.g., in other rectangular arrays, in other patterns, in random assortments, etc.). Regardless of the arrangement of the ports 114, no arrangement of the ports 114 will fit all possible shapes of objects. Some objects may have a shape that permits the objects to engage all of the ports 114. Other objects may have a shape that permits the objects to engage a subset of the ports 114.

The ports 114 are coupled in parallel to the vacuum chamber 110. If no valves were located between the ports 114 and the vacuum chamber 110, a vacuum drawn in the vacuum chamber 110 would extend to each of the ports 114. In such a scenario, if an object were to engage of the ports 114, the vacuum would exert a force on the object at each of the ports 114. However, if one of the ports 114 was not engaged by the object, the leakage of air through the non-engaged port would significantly reduce the force of the vacuum at the engaged ports. If more than one of the ports 114 were not engaged by the object, the leakage of air through the non-engaged ports would reduce the force of the vacuum at the engaged ports by an even greater magnitude.

In order to prevent leakage from non-engaged ports, the vacuum manifold 100 can include a valve for each of the ports 114. However, as noted above, having a number of valves that are independently controlled (e.g., by a controller) to open each valve when the corresponding suction cup contacts the object can be complex and expensive. Such a system may require sensors for each of the ports 114 to determine whether each port is engaged and then an actuator to open and close the valves based on whether the port is engaged. It would be advantageous to prevent leakage from non-engaged ports without actively-controlled valves.

The vacuum manifold 100 includes valves 118 that are passive valves. One of the valves 118 is positioned between one of the ports 114 and the vacuum chamber 110. The valves 118 are biased closed and configured to passively open in response to the corresponding one of the ports 114 being engaged by an object. In this way, if one of the ports 114 is not engaged by an object, the valve 118 corresponding to that port 114 is remains closed to prevent leakage through the port 114. The valves 118 are configured to move between the open and closed positions independently of each other so that, for the ports 114 that are engaged, the corresponding valves 118 will be open and, for the ports 114 that are non-engaged, the corresponding valves 118 will be closed.

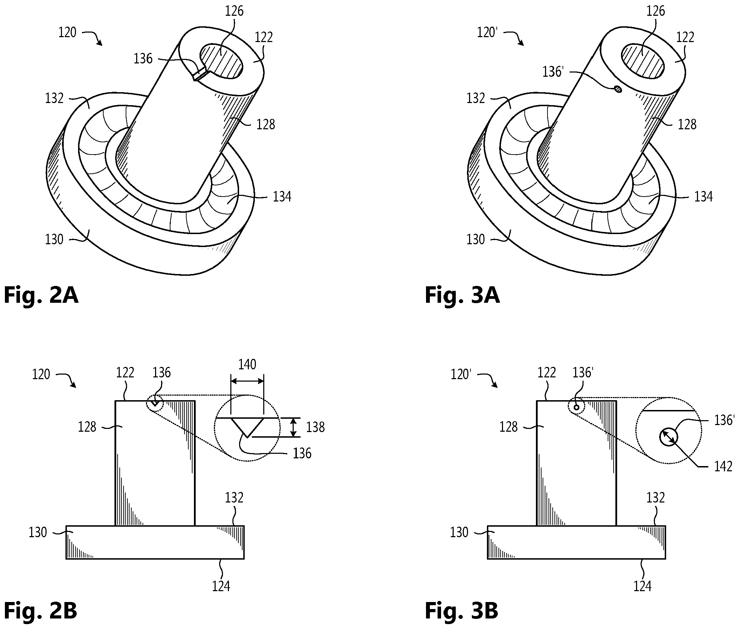

Each of the valves 118 includes a moving component 120. Figs. 2A and 2B depict perspective and side views, respectively, of an exemplary moving component 120. The moving component 120 includes a first end 122 and a second end 124. The moving component 120 further includes a channel 126 that extends through the moving component 120 from the first end 122 to the second end 124. In the depicted embodiment, the moving component 120 is cylindrical in shape and the channel 126 is a through hole in the moving component 120.

In the particular example shown in Figs. 2A and 2B, the cylindrical shape of the moving component 120 has a stepped-diameter profile that includes a first portion 128 and a second portion 130. The first portion 128 of the moving component 120 includes the first end 122 and has a first diameter. The second portion 130 of the moving component 120 includes the second end 124 and has a second diameter. In the depicted embodiment, the first diameter of the first portion 128 is smaller than the second diameter of the second portion 130. While the embodiment of the moving component 120 and the channel 126 depicted in Figs. 2A and 2B have particular shapes, it will be understood that the moving component 120 and/or the channel 126 could have other shapes and still accomplish the functions described herein.

In the depicted embodiment, the second portion 130 of the moving component 120 includes a third end 132 that is opposite the second end 124. In some embodiments, the third end 132 has a trough 134 that extends around the first portion 128 of the moving component 120. As discussed in greater detail below, the third end 132 can be exposed to an ambient environment (e.g., via a reference channel) when the moving component 120 is in the vacuum manifold 100 to aid in the passive opening of the valve 118 when the port 114 is engaged. In embodiments where the third end 132 includes the trough 134, the trough 134 may allow portions of the third end 132 around the first portion 128 to be exposed to the ambient environment.

The moving component 120 further includes a bleed orifice 136 that extends through the moving component 120 between the channel 126 and a side of the moving component 120. As described in greater detail below, the end of the bleed orifice 136 on the side of the moving component 120 can be exposed to the vacuum chamber 110 of the vacuum manifold 100 when the valve 118-including the moving component 120-is in the closed position. The bleed orifice 136 permits gas to pass from the side of the moving component 120 into the channel 126 and vice versa. In the depicted embodiment, the channel 126 extends in a direction that is substantially perpendicular to a direction in which the bleed orifice 136 extends. For example, the channel 126 extends substantially parallel to an axis of the moving component 120 and the bleed orifice 136 extends substantially perpendicular to the axis of the moving component 120.

In some embodiments, dimensions of the bleed orifice 136 are selected based on an amount of gas to be permitted to pass through the bleed orifice 136. For example, in the embodiment depicted in Figs. 2A and 2B, the bleed orifice 136 is a notch in the first end 122. The notch has a triangular cross-section that has a height 138 and a width 140, each of which may be selected based on an amount of gas to be permitted to pass through the bleed orifice 136. Figs. 3A and 3B depict another example of a moving component 120' having a different form of a bleed orifice 136'. In thatexample, the bleed orifice 136' is a through hole in the first portion 128 of the moving component 120. The bleed orifice 136' has a diameter 142 that may be selected based on an amount of gas to be permitted to pass through the bleed orifice 136'. It will be apparent that in other embodiments bleed orifices may have other shapes, forms, dimensions, and the like, while still being able to permit gas to pass from the side of the moving component 120 into the channel 126 and vice versa.

Referring back to Figs. 1A to 1D, each of the valves 118 in the vacuum manifold 100 includes the moving component 120. In the depicted embodiment, the moving component 120 is located within a portion of the vacuum manifold that includes a first bore 144 and a second bore 146. The first portion 128 of the moving component 120 is located in the first bore 144 and the second portion 130 of the moving component 120 located in the second bore 146. In some embodiments, the first diameter of the first portion 128 is selected to limit passage of gas between the first portion 128 of the moving component 120 and the first bore 144. Similarly, the second diameter of the second portion 130 is selected to limit passage of gas between the second portion 130 of the moving component 120 and the second bore 146.

The valves 118 further include biasing mechanisms 148 that bias the moving components 120 to a closed position. In the depicted embodiment, the biasing mechanism 148 is a compression spring positioned between the port 114 and the second end 124 of the moving component 120. In the embodiment shown in Fig. 1D, the moving components 120 are all in the closed position. In the closed position, the first end 122 of the moving component 120 is in contact with the vacuum chamber 110. In the depicted embodiment, the first end 122 is in contact with a portion of the top component 104 that forms the vacuum chamber 110. The positioning of the first end 122 of the moving component in contact with the inner wall of the vacuum chamber 110 deters movement of gas into and out of the channel 126 at the first end 122. However, as discussed in more detail below, the bleed orifice 136 still permits passage of some gas between the vacuum chamber 110 and the channel 126.

In the depicted embodiment, the third end 132 of the moving component 120 of each of the valves 118 is in fluid communication with a reference channel 150 in the body 102 of the vacuum manifold 100. The reference channel 150 is exposed to the ambient environment outside of the vacuum manifold 100. When a vacuum is drawn in the vacuum chamber 110, the pressure in the ambient environment is greater than the pressure in the vacuum chamber 110. In the depicted embodiment, the reference channels 150 passes through the top and middle components 104 and 106 of the body 20 in parallel for each of the valves 118. In other embodiments, a single reference channel may fluidly couple to two or more moving components 120 to the ambient environment.

Fig. 1E depicts a cross-sectional view of the vacuum manifold 100 when a vacuum is being drawn in the vacuum chamber 110. In the depicted embodiment, a connector 152 has been coupled to the vacuum port 112 and a gas line 154 is coupled to the connector 152. In some embodiments, the connector 152 has external threads that engage internal threads of the vacuum port 112 and form a substantially sealed connection. The connector 152 also has ridges that engaged the internal diameter of the gas line 154 to form a substantially sealed connection. The other end of the gas line 154 can be connected to a vacuum source (not shown), which can draw a vacuum in the vacuum chamber 110 through the gas line 154.

In Fig. 1E, long-short-long dashed lines indicate the possible passage of gas in the vacuum manifold 100. With the moving components 120 in the closed position, the first ends 122 of the moving components 120 deters passage of gas out of the channels 126 and into the vacuum chamber 110. However, the bleed orifices 136 permit the passage of gas from the channels 126 into the vacuum chamber 110. Thus, as can be seen in Fig. 1E, gas is permitted to flow through the non-engaged ports 114, through the channels 126 of the moving components 120, through the bleed orifices 136 of the moving components 120, and into the vacuum chamber 110. In some embodiments, the cross-section areas of the bleed orifices 136 are relatively small (e.g., compared to the cross-section area of the channel 126 at the first ends 122) so that, when the moving components 120 are in the closed position, the flow of gas through the bleed orifices 136 is relatively low. In this way, the load on the vacuum source from the ports 114 that are not engage is relatively low.

As can be seen in Fig. 1E, the gas is also permitted to pass from the ambient environment to the third ends 132 of the moving components 120 via the reference channels 150. At the instance shown in Fig. 1E, the ports 114 are also exposed to the ambient environment because the ports 114 are not engaged. Thus, the force of pressure from the ambient environment on the second ends 124 (via the ports 114) and on the third ends 132 (via the reference channels 150) is substantially the same so that there is negligible, if any, pressure difference on the second and third ends 124 and 132. In this condition, the force of the biasing mechanisms 148 are able to bias the moving component to the closed position.

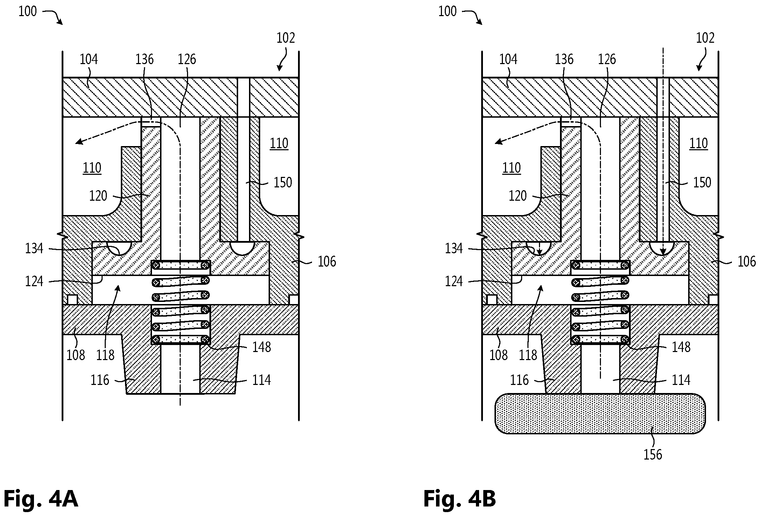

Figs. 4A to 4H depict partial cross-sectional views the vacuum manifold 100, and each of Figs. 4A to 4H shows an instance in an embodiment of a method of a valve 118 opening and closing passively. At the instance shown in Fig. 4A, the valve 118 is in the same condition shown in Fig. 1E. In particular, a vacuum is being drawn in the vacuum chamber 110, the port 114 is not engaged, and the moving component 120 is biased to the closed position by the biasing mechanism 148. As indicated by the long-short-long dashed line, gas is permitted to flow through the port 114, the channel 126, the bleed orifice 136, and into the vacuum chamber 110.

Fig. 4B depicts the instance when an object 156 engages the port 114. With the object 156 engaging the port 114, gas is no longer permitted to flow into the port 114. However, the vacuum source is still drawing a vacuum in the vacuum chamber 110. Because the bleed orifice 136 allows passage of gas from the channel 126 into the vacuum chamber 110, the vacuum will begin to be drawn inside of the channel 126 and in the areas below the second end 124. Thus, the pressure in the channel 126 and the area below the second end 124 of the moving component 120 will begin to reduce. The reference channel 150 remains in communication with the ambient environment such that the third end 132 and/or the trough 134 is in communication with the ambient environment. Thus, as the pressure on the second end 124 begins to reduce, a pressure differential between the third end 132 and the second end 124 will begin to grow. In the depicted embodiment, the reference channel 150 is aligned with a portion of the trough 134 and the trough 134 extends around the entire moving component 120 such that the entirety of the trough 134 is exposed to the pressure of the ambient environment and the pressure of on the trough 134 exerts a force that is substantially symmetric with respect to an axis of the moving component 120.

In some embodiments, the biasing force of the biasing mechanism 148 (e.g., the spring force when the biasing mechanism 148 is a spring) is less than the force from the expected maximum pressure differential between the third end 132 and the second end 124. Thus, as the pressure differential grows, the pressure differential will eventually overcome the biasing force of the biasing mechanism 148. In some embodiments, the moving component 120 will begin moving when the pressure in the channel 126 reaches a gauge pressure in a range between about -1.2 psi (-8.3 kPa) and about -6.9 psi (-47.6 kPa).

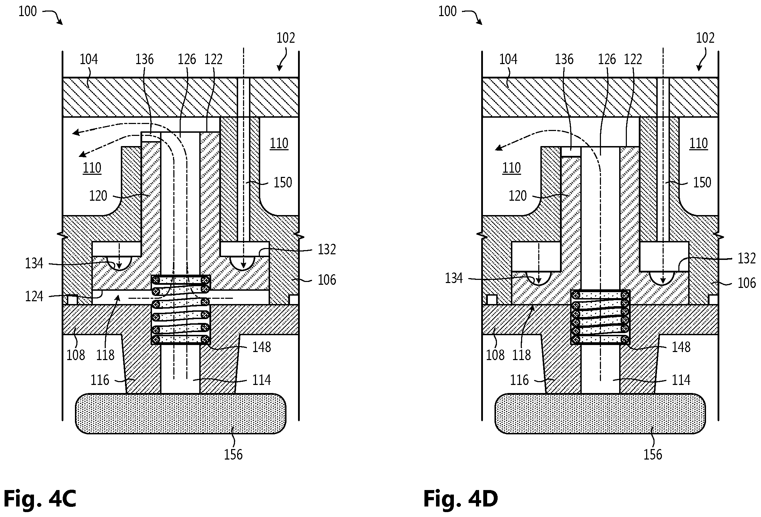

Fig. 4C depicts an instance after the pressure differential has initially overcome the biasing force of the biasing mechanism 148 and the moving component 120 has begun to open. Because the moving component 120 has begun to open, the first end 122 is no longer in contact with the vacuum chamber 110. This greatly increases the ability of gas to flow from the channel 126 into the vacuum chamber 110 because the end of the channel 126 at the first end 122 is now exposed to the vacuum chamber 110 and the bleed orifice 136 is no longer the only passage for gas from the channel 126 into the vacuum chamber 110. The third end 132 remains in fluid communication with the ambient environment via the reference channel 150. This outflow of gas from the channel 126 and the areas under the second end 124 further increases the pressure differential between the third end 132 and the second end 124.

Fig. 4D depicts the instance when the moving component 120 reaches the open position. In some embodiments, the moving component 120 will reach the open position when the pressure in the channel 126 reaches a gauge pressure in a range between about -2.0 psi (-13.8 kPa) and about -11.4 psi (-78.6 kPa). In the open position, the first end 122 of the moving component 120 is not in contact with the vacuum chamber 110. In the depicted embodiment, the second end 124 of the moving component 120 is in contact with the lower component 108 of the body 102 of the vacuum manifold 100. In some embodiments, when the moving component 120 is in the open configuration, the pressure in the channel 126 is substantially the same as the pressure in the vacuum chamber 110. As long as the object 156 remains engaged to the port 114, the moving component 120 will remain in the open position.

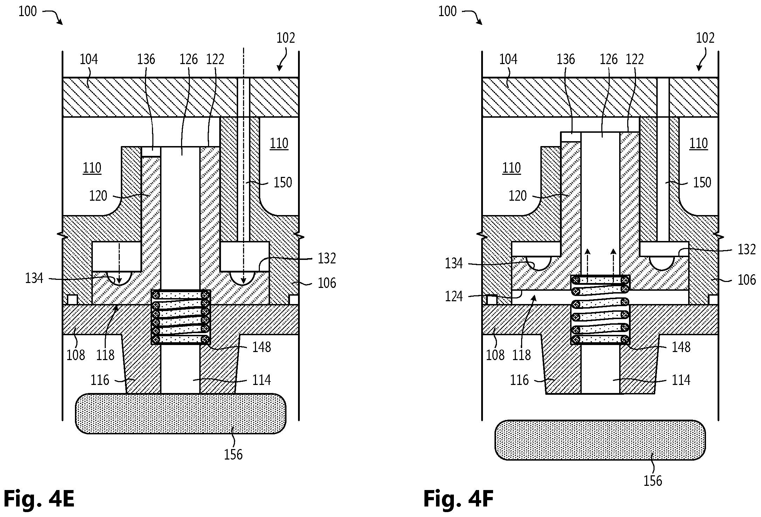

Fig. 4E depicts an instance some time after the instance shown in Fig. 4D where the object 156 remains engaged to the port 114 and the moving component 120 remains in the open position. With the object 156 engaged to the port 114 and the vacuum drawn in the channel 126, the vacuum exerts a force on the object 156 such that the object 156 can be lifted, repositioned, turned, or otherwise moved by moving the vacuum manifold 100. The force of the vacuum on the object 156 at the port 114 will continue to be exerted until the object 156 is disengaged from the port 114.

Fig. 4F depicts an instance after the object 156 has been disengaged from the port 114. In some embodiments, the object 156 can be disengaged from the port 114 by exerting a force on the object 156 that will overcome the force of the vacuum. For example, in the depicted embodiment, the object 156 can be pulled downward away from the port 114 so that the object 156 is no longer in contact with the port 114. In some embodiments, the object 156 can be disengaged from the port by powering down the vacuum source and/or reducing the strength of the vacuum source. The loss or reduction of the vacuum can allow the object 156 to drop or fall from the port 114.

Once the object 156 no longer engages the port 114, the port is again exposed to the ambient atmosphere and the pressure in the port 114 and the channel 126 increases. As the pressure in the port 114 and the channel 126 increases, the pressure differential between the third end 132 and the second end 124 decreases. As the pressure differential decreases, the pressure differential is no longer sufficient to overcome the biasing force of the biasing mechanism 148. At the instance shown in Fig. 4F, the moving component 120 is in the process of moving back from the open position to the closed position.

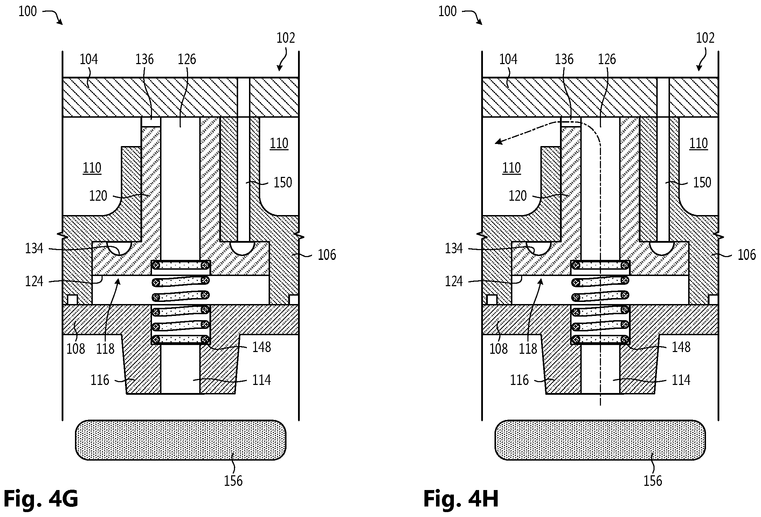

Fig. 4G depicts the instance when the moving component 120 reaches the closed position. At that point, the first end 122 is again in contact with the vacuum chamber 110 such that gas is deterred from moving from the channel 126 into the vacuum chamber 110. However, the bleed orifice 136 continues to permit a relatively small flow of gas from the channel 126 into the vacuum chamber 110. In cases where the object 156 is disengaged from the port 114 by reducing or eliminating the vacuum, the vacuum source can remain off or reduced through the instance shown in Fig. 4G.

Fig. 4H depicts the flow of gas from the channel 126 into the vacuum chamber 110 that is permitted by the bleed orifice 136. At the instance shown in Fig. 4H, the vacuum source is again drawing the vacuum in the vacuum chamber 110 substantially similar to how the vacuum was being drawn in the instance shown in Fig. 4A. At the point shown in Fig. 4H, the port 114 can again be engaged by an object (e.g., the object 156 or another object) and the process shown in Figs. 4A to 4H can be repeated.

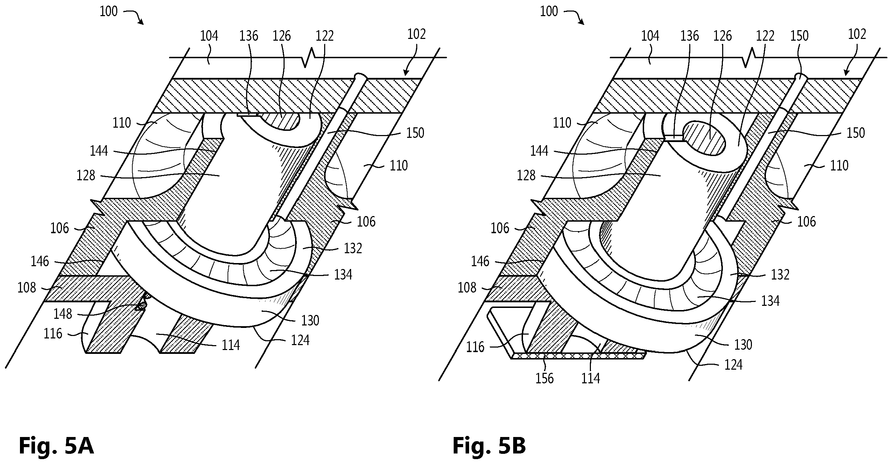

Figs. 5A and 5B depict perspective views of an embodiment of the moving component 120 and a cross-section of the vacuum manifold 100 in the closed and open positions, respectively. As can be seen in Fig. 5A, when the port 114 is non-engaged and the moving component 120 is in the closed position, the first end 122 is in contact with the vacuum chamber 110 in the closed position. The bleed orifice 136 also permits the passage of gas from the channel 126 to the vacuum chamber 110 while the moving component 120 is in the closed position. As can be seen in Fig. 5B, when the port 114 is engaged by the object 156 and the moving component 120 is in the open position, the first end 122 is not in contact with the vacuum chamber 110 in the closed position. Gas is permitted to exit the channel 126 through the first end 122 and into the vacuum chamber 110.

As can be seen in the depicted embodiment, the cross-sectional area of the bleed orifice 136 is significantly less than the cross-sectional area of the channel 126 at the first end. Thus, the flow of gas permitted by the bleed orifice 136 when the moving component 120 is in the closed position is less than the flow of gas permitted through the first end 122 when the moving component 120 is in the open position. In this way, the flow of gas through the bleed orifice 136 when the moving component 120 is in the closed position limits the amount of gas that can pass from the channel such that the gas that passes through the bleed orifice does not significantly affect the vacuum drawn in the vacuum chamber 110. Similarly, when the moving component 120 is in the open position, the flow of gas permitted through the first end 122 allow the full force of the vacuum drawn in the vacuum chamber 110 to be applied to the object 156 at the port 114. Where the vacuum manifold includes multiple ports 114, the flow rates of the gas through the open and closed moving components 120 allow an object to engage one or more, but not all, of the ports 114 and be gripped by the force of the vacuum on the engaged ports 114.

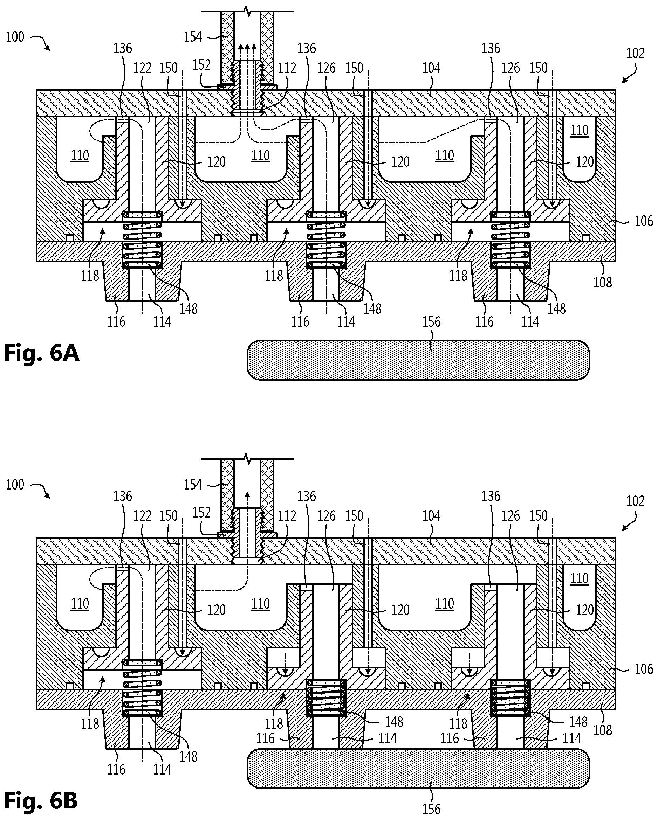

Figs. 6A and 6B depict an embodiment of the vacuum manifold 100 and the object 156 engaging some, but not all, of the ports 114. Figs. 6A and 6B depict a portion of the vacuum manifold 100 that includes three ports 114-referred to below as the left port 114, the middle port 114, and the right port 114-and three valves-referred to below as the left valve 118, the middle valve 118, and the right valve 118. At the instance shown in Fig. 6A, the manifold is in a position similar to the position shown in Fig. 1E. In particular, the left, middle, and right ports 114 are all non-engaged and each of the left, middle, and right moving components 120 is in the closed position. The vacuum source is drawing a vacuum in the vacuum chamber 110 via the gas line 154. Gas is able to pass through each of the left, middle, and right ports 114, through the left, middle, and right channels 126, through the left, middle, and right bleed orifices 136, and into the vacuum chamber 110.

At the instance depicted in Fig. 6B, the object 152 has engaged the middle and right ports 114. The engagement of the middle and right ports 114 caused the pressure in the middle and right channels 126 to be reduced to the point that the pressure on the third end 132 from the ambient environment overcame the biasing force of the middle and right biasing mechanisms 148 to move the middle and right moving components 120 from the closed position shown in Fig. 6A to the open position shown in Fig. 6B. The pressure in the middle and right channels 126 and at the middle and right ports 114 has been reduced such that a gripping force is exerted on the object 156 at the middle and right ports 114.

The object 156 has not engaged the left port 114 at the instance shown in Fig. 6B. Because the left port 114 remains non-engaged, the left moving component 120 remains in the closed position. With the left moving component 120 in the closed position, some gas is permitted to pass through the left port 114, through the left channel 126, through the left bleed orifice 136, and into the vacuum chamber 110. However, the cross-sectional area of the left bleed orifice 136 has been selected such that the limited flow of gas through the left bleed orifice 136 does not have a significant negative impact on the pressure in the vacuum chamber.

In some embodiments, one or more dimensions of a bleed orifice is selected based on a predetermined flow rate of gas permitted to pass through the bleed orifice when the moving component is in the closed position. In some cases, where a vacuum manifold includes multiple valves, the one or more dimensions of the bleed orifices of the valves are selected based on a number of the valves in the vacuum manifold. For example, the one or more dimensions of the bleed orifices of the valves may be selected such that, if a vacuum manifold included n valves and an object was engaged to only one of the ports, the force exerted on the object at that one port would be above a minimum force despite gas being permitted to flow through the bleed orifices of the remaining *n-1* valves.

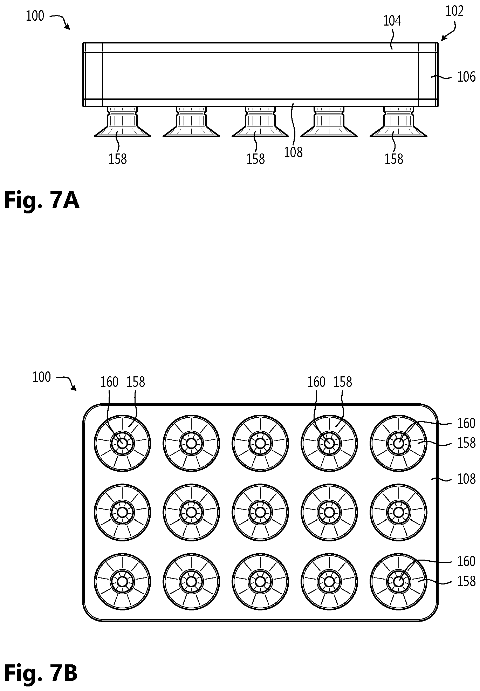

Figs. 7A and 7B depict side and bottom views, respectively, of an embodiment of the vacuum manifold 100 having engagement components 158. In the depicted embodiments, the engagement components 158 are suction cups. In other embodiments, the engagement components 158 may be any other type of engagement components configured to engage objects with the ports. The depicted embodiment includes one of the engagement components 158 on each of the protrusions 116. In the depicted embodiment, each of the engagement components 158 is formed separately from and coupled to one of the plurality of ports 114. In other embodiments, the engagement components 158 can be integrally formed with the plurality of ports 114 (e.g., integrally formed with the protrusions 116). In the depicted embodiment, each of the engagement components 158 includes a gas passageway 160 that permits gas to flow from outside of the engagement component 158 and into the port 114 to which the engagement component 158 is coupled.

In some embodiments, the cross-sectional area of the channel of a moving component is determined such that the cross-sectional area of the channel is the smallest passageway between the ambient environment and the vacuum chamber when the valve is open. For example, in some embodiments, the cross-sectional area of the channel is less than a cross-sectional area of a gas passageway in the port. In another example where the port includes an engagement component that has a gas passageway, the cross-sectional area of the channel is less than a cross-sectional area of the gas passageway of the engagement component. If the cross-sectional area of the channel is the smallest passageway between the ambient environment and the vacuum chamber, the size of the channel is the limiting factor of the flow of gas when the moving component is in the open position. If another component (e.g., the port or an engagement component) had a smaller cross-sectional area, that component would limit the flow of gas and cause the moving device to hang in the open position even after the port is no longer engaged by an object.

The embodiments of vacuum manifolds described herein can be used on end-of-arm tools, such as those disclosed in WO 2021/163003 A1. The use of the vacuum manifolds described herein can be useful particularly when the end-of-arm tool is used to pick up and/or move objects of various sizes. The passive opening and closing of the valves allows the most force to be applied to each object without the need for user intervention or operation to adjust the valves.

For purposes of this disclosure, terminology such as "upper," "lower," "vertical," "horizontal," "inwardly," "outwardly," "inner," "outer," "front," "rear," and the like, should be construed as descriptive and not limiting the scope of the claimed subject matter. Further, the use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Unless stated otherwise, the terms "substantially," "approximately," and the like are used to mean within 5% of a target value.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the scope of the present invention as defined in the accompanying claims.

## Claims

1. A vacuum manifold (100) comprising:
a vacuum chamber (110); and
a valve (118) located between the vacuum chamber (110) and a port (114) and configured to passively couple the vacuum chamber (110) to the port (114) when the port (114) is engaged by an object (156), the valve (118) comprising:
a moving component (120, 120') having a first end (122) and a second end (124) opposite the first end (122), wherein the moving component (120, 120') is movable between a closed position and an open position;
a channel (126) extending through the moving component (120, 120') between the first and second ends (122, 124);
a bleed orifice (136, 136') extending through the moving component (120, 120') between the channel (126) and a side of the moving component (120, 120') that is exposed to the vacuum chamber (110) when the moving component (120, 120') is in the closed position; and
a biasing mechanism (148) configured to bias the moving component (120, 120') to the closed position;
wherein, when the moving component (120, 120') is in the closed position, the first end (122) of the moving component (120, 120') is in contact with an inner wall of the vacuum chamber (110) to deter movement of gas into and out of the channel (126) at the first end (122);
wherein, when the moving component (120, 120') is in the open position, the first end (122) of the moving component (120, 120') is not in contact with the inner wall of the vacuum chamber (110);
wherein the bleed orifice (136, 136') permits gas to pass such that, when a vacuum is drawn in the vacuum chamber (110) and the port (114) is engaged by an object (156), a pressure on the second end (124) of the moving component (120, 120') is reduced to overcome a force of the biasing mechanism (148) and cause the moving component (120, 120') to passively move from the closed position to the open position.

2. The vacuum manifold (100) of claim 1, wherein one or more dimensions of the bleed orifice (136, 136') are selected based on a predetermined flow rate of gas permitted to pass through the bleed orifice (136, 136') when the moving component (120, 120') is in the closed position.

3. The vacuum manifold (100) of any one of the preceding claims, wherein the channel (126) extends in a direction that is substantially perpendicular to a direction in which the bleed orifice (136, 136') extends.

4. The vacuum manifold (100) of any one of the preceding claims, wherein the bleed orifice (136, 136') includes at least one of a notch (136) in the first end (122) of the moving component (120, 120') and a through hole (136') in the moving component (120, 120').

5. The vacuum manifold (100) of any one of the preceding claims, wherein the moving component (120, 120') is cylindrical in shape and the channel (126) is a through hole in the moving component (120, 120').

6. The vacuum manifold (100) of claim 5, wherein the cylindrical shape of the moving component (120, 120') has a stepped-diameter profile such that a first portion (128) of the moving component (120, 120') that includes the first end (122) has a first diameter, a second portion (130) of the moving component (120, 120') that includes the second end (124) has a second diameter, and the first diameter is smaller than the second diameter.

7. The vacuum manifold (100) of claim 6, wherein the second portion (130) of the moving component (120, 120') includes a third end (132) opposite the second end (124), and wherein the third end (132) is exposed to an ambient environment, optionally wherein the third end (132) has a trough (134) that extends around the first portion (128) of the moving component (120, 120'), and wherein the trough (134) is communicatively coupled to the ambient environment via a reference channel (150).

8. The vacuum manifold (100) of any one of claims 6 to 7, wherein the moving component (120, 120') is configured to be located within a portion of the vacuum manifold (100) that includes a first bore (144) and a second bore (146) with the first portion (128) of the moving component (120, 120') located in the first bore (144) and the second portion (130) of the moving component (120, 120') located in the second bore (146), wherein the first diameter is selected to limit passage of gas between the first portion (128) of the moving component (120, 120') and the first bore (144), and wherein the second diameter is selected to limit passage of gas between the second portion (130) of the moving component (120, 120') and the second bore (146).

9. The vacuum manifold (100) of any one of the preceding claims, wherein the biasing mechanism (148) includes a compression spring positioned between the port (114) and the second end (124) of the moving component (120, 120').

10. The vacuum manifold (100) of any one of the preceding claims, wherein a cross-sectional area of the channel (126) is less than a cross-sectional area of a gas passageway in the port (114), optionally wherein, when an engagement component (158) is coupled to the port (114) and the engagement component (158) has a gas passageway (160), the cross-sectional area of the channel (126) is less than a cross-sectional area of the gas passageway (160) of the engagement component (158).

11. The vacuum manifold (100) of claim 1, wherein, when the object (156) is disengaged from the port (114), the biasing mechanism (148) is configured to move the moving component (120, 120') from the open position to the closed position.

12. The vacuum manifold (100) of any of the preceding claims, further comprising:
a plurality of ports (114) coupled in parallel to the vacuum chamber (110), wherein the plurality of ports (114) are exposed to the ambient atmosphere; and
a plurality of valves (118), wherein each of the plurality of valves (118) is located between the vacuum chamber (110) and one of the plurality of ports (114);
wherein the plurality of valves (118) are configured to move between the open and closed positions independently of each other.

13. The vacuum manifold (100) of claim 12, wherein one or more dimensions of the bleed orifices (136, 136') of the plurality of valves (118) are selected based on a number of the plurality of valves (118);
optionally wherein the vacuum manifold (100) further comprises a plurality of suction cups, each of which is coupled to one of the plurality of ports (114);
further optionally wherein the plurality of suction cups are either integrally formed with the plurality of ports (114) or are formed separately from the plurality of ports (114).

14. The vacuum manifold (100) of any one of claims 12 to 13, wherein, for each of the plurality of valves (118), a cross-sectional area of the channel (126) is less than a cross-sectional area of a gas passageway in a corresponding port (114) of the plurality of ports (114).

15. The vacuum manifold (100) of any one of claims 12 to 14, wherein the vacuum manifold (100) is coupled to a vacuum source configured to draw the vacuum in the vacuum chamber (110).

## Patentansprüche

1. Unterdruckverteiler (100) mit:
einer Unterdruckkammer (110) und
einem Ventil (118), das zwischen der Unterdruckkammer (110) und einem Anschluss (114) angeordnet ist und dazu ausgestaltet ist, die Unterdruckkammer (110) passiv mit dem Anschluss (114) zu verbinden, wenn der Anschluss (114) durch ein Objekt (156) belegt ist, wobei das Ventil (118) aufweist:
eine bewegliche Komponente (120, 120') mit einem ersten Ende (122) und einem zweiten Ende (124) gegenüber dem ersten Ende (122), wobei die bewegliche Komponente (120, 120') zwischen einer geschlossenen Stellung und einer geöffneten Stellung ist,
einen durch die bewegliche Komponente (120, 120') zwischen den ersten und zweiten Enden (122, 124) verlaufenden Kanal (126),
eine Ableitungsöffnung (136, 136'), die durch die bewegliche Komponente (120, 120') zwischen dem Kanal (126) und einer Seite der beweglichen Komponente (120, 120') verläuft, die der Unterdruckkammer (110) ausgesetzt ist, wenn die bewegliche Komponente (120, 120') sich in der geschlossenen Stellung befindet, und
einen Vorspannmechanismus (148), der dazu ausgestaltet ist, die bewegliche Komponente (120, 120') in die geschlossene Stellung vorzuspannen,
wobei, wenn die bewegliche Komponente (120, 120') in der geschlossenen Stellung ist, das erste Ende (122) der beweglichen Komponente (120, 120') in Kontakt mit einer Innenwand der Unterdruckkammer (110) ist, um am ersten Ende (122) die Bewegung von Gas in den Kanal (126) hinein und von dort heraus zu verhindern,
wobei, wenn die bewegliche Komponente (120, 120') in der geöffneten Stellung ist, das erste Ende (122) der beweglichen Komponente (120, 120') nicht in Kontakt mit der Innenwand der Unterdruckkammer (110) ist,
wobei die Ableitungsöffnung (136, 136') den Durchgang von Gas erlaubt, so dass, wenn in der Unterdruckkammer (110) Unterdruck erzeugt wird und der Anschluss (114) durch ein Objekt (156) belegt ist, ein Druck am zweiten Ende (124) der beweglichen Komponente (120, 120') reduziert wird, um eine Kraft des Vorspannmechanismus (148) zu überwinden und zu bewirken, dass sich die bewegliche Komponente (120, 120') passiv aus der geschlossenen Stellung in die geöffnete Stellung bewegt.

2. Unterdruckverteiler (100) nach Anspruch 1, wobei eine oder mehrere Dimensionen der Ableitungsöffnung (136, 136') ausgewählt sind basierend auf einem vorbestimmten Durchflussstrom von Gas, der die Ableitungsöffnung (136, 136') passieren darf, wenn die bewegliche Komponente (120, 120') in der geschlossenen Stellung ist.

3. Unterdruckverteiler (100) nach einem der vorhergehenden Ansprüche, wobei der Kanal (126 ) in eine Richtung verläuft, die im Wesentlichen senkrecht zu einer Richtung ist, in der die Ableitungsöffnung (136, 136') verläuft.

4. Unterdruckverteiler (100) nach einem der vorhergehenden Ansprüche, wobei die Ableitungsöffnung (136, 136') wenigstens eine Nut (136) am ersten Ende (122) der beweglichen Komponente (120, 120') und eine Durchgangsöffnung (136') in der beweglichen Komponente (120, 120') aufweist.

5. Unterdruckverteiler (100) nach einem der vorhergehenden Ansprüche, wobei die bewegliche Komponente (120, 120') zylindrische Form hat und der Kanal (126) eine Durchgangsöffnung in der beweglichen Komponente (120, 120') ist.

6. Unterdruckverteiler (100) nach Anspruch 5, wobei die zylindrische Form der beweglichen Komponente (120, 120') ein Profil mit abgestuftem Durchmesser hat, so dass ein erster Abschnitt (128) der beweglichen Komponente (120, 120'), der das erste Ende (122) beinhaltet, einen ersten Durchmesser hat, ein zweiter Abschnitt (130) der beweglichen Komponente (120, 120'), der das zweite Ende (124) beinhaltet, einen zweiten Durchmesser hat und der erste Durchmesser kleiner als der zweite Durchmesser ist.

7. Unterdruckverteiler (100) nach Anspruch 6, wobei der zweite Abschnitt (130) der beweglichen Komponente (120, 120') ein drittes Ende (132) gegenüber dem zweiten Ende (124) aufweist und wobei das dritte Ende (132) einer Umgebungsumwelt ausgesetzt ist, wobei optional das dritte Ende (132) eine Rinne (134) aufweist, die um den ersten Abschnitt (128) der beweglichen Komponente (120, 120') herum verläuft, und wobei die Rinne (134) durch einen Referenzkanal (150) in Durchflussverbindung mit der Umgebungsumwelt verbunden ist.

8. Unterdruckverteiler (100) nach einem der Ansprüche 6 bis 7, wobei die bewegliche Komponente (120, 120') dazu ausgestaltet ist, sich innerhalb eines Bereichs des Vakuumverteilers (100) zu befinden, der eine erste Bohrung (144) und eine zweite Bohrung (146) aufweist, wobei der erste Abschnitt (128) der beweglichen Komponente (120, 120') sich in der ersten Bohrung (144) befindet und der zweite Abschnitt (130) der bewegliche Komponente (120, 120') sich in der zweiten Bohrung (146) befindet, wobei der erste Durchmesser ausgewählt ist, um den Durchgang von Gas zwischen dem ersten Abschnitt (128) der beweglichen Komponente (120, 120') und der ersten Bohrung (144) zu begrenzen, und wobei der zweite Durchmesser ausgewählt ist, um den Durchgang von Gas zwischen dem zweiten Abschnitt (130) der beweglichen Komponente (120, 120') und der zweiten Bohrung (146) zu begrenzen.

9. Unterdruckverteiler (100) nach einem der vorhergehenden Ansprüche, wobei der Vorspannmechanismus (148) eine Kompressionsfeder aufweist, die zwischen dem Anschluss (114) und dem zweiten Ende (124) der beweglichen Komponente (120, 120') positioniert ist.

10. Unterdruckverteiler (100) nach einem der vorhergehenden Ansprüche, wobei eine Querschnittsfläche des Kanals (126) kleiner als eine Querschnittsfläche eines Gasdurchgangsweges in dem Anschluss (114) ist, wobei optional, wenn eine Belegungskomponente (158) mit dem Anschluss (114) verbunden ist und die Belegungskomponente (158) einen Gasdurchgangsweg (160) hat, die Querschnittsfläche des Kanals (126) kleiner ist als die Querschnittsfläche des Gasdurchgangsweges (160) der Belegungskomponente (158) ist.

11. Unterdruckverteiler (100) nach Anspruch 1, wobei der Vorspannmechanismus (148) dazu ausgestaltet ist, wenn das Objekt (156) von dem Anschluss (114) gelöst ist, die bewegliche Komponente (120, 120') aus der geöffneten Stellung in die geschlossene Stellung zu bewegen.

12. Unterdruckverteiler (100) nach einem der vorhergehenden Ansprüche, weiterhin mit:
einer Mehrzahl von Anschlüssen (114), die parallel mit der Unterdruckkammer (110) verbunden sind, wobei die Mehrzahl von Anschlüssen (114) der Umgebungsatmosphäre ausgesetzt ist, und
einer Mehrzahl von Ventilen (118), wobei jedes aus der Mehrzahl der Ventile (118) zwischen der Unterdruckkammer (110) und einem aus der Mehrzahl von Anschlüssen (114) angeordnet ist,
wobei die Mehrzahl von Ventilen (118) dazu ausgestaltet sind, sich unabhängig voneinander zwischen den geöffneten und geschlossenen Stellungen zu bewegen.

13. Unterdruckverteiler (100) nach Anspruch 12, wobei eine oder mehrere Abmessungen der Ableitungsöffnungen (136, 136') der Mehrzahl von Ventilen (118) ausgewählt sind basierend auf einer Anzahl der Mehrzahl von Ventilen (118),
wobei optional der Unterdruckverteiler (100) eine Mehrzahl von Saugnäpfen aufweist, von denen jeder mit einem aus der Mehrzahl der Anschlüsse (114) verbunden ist,
wobei weiter optional die Mehrzahl von Saugnäpfen entweder in einem Stück mit der Mehrzahl von Anschlüssen (114) gebildet sind oder separat von der Mehrzahl von Anschlüssen (114) gebildet sind.

14. Unterdruckverteiler (100) nach einem der Ansprüche 12 bis 13, wobei für jedes aus der Mehrzahl von Ventilen (118) eine Querschnittsfläche des Kanals (126) kleiner ist als eine Querschnittsfläche eines Gasdurchgangswegs in einem entsprechenden Anschluss (114) aus der Mehrzahl von Anschlüssen (114).

15. Unterdruckverteiler (100) nach einem der Ansprüche 12 bis 14, wobei der Unterdruckverteiler (100) mit einer Unterdruckquelle verbunden ist, die dazu ausgestaltet ist, den Unterdruck in der Unterdruckkammer (110) zu erzeugen.

## Revendications

1. Collecteur à vide (100) comprenant:
une chambre à vide (110); et
une vanne (118) située entre la chambre à vide (110) et un orifice (114) et configurée pour coupler, de manière passive, la chambre à vide (110) à l'orifice (114), lorsque l'orifice (114) est mis en prise par un objet (156), la vanne (118) comprenant:
un composant mobile (120, 120') ayant une première extrémité (122) et une deuxième extrémité (124) opposée à la première extrémité (122), dans lequel le composant mobile (120, 120') est mobile entre une position fermée et une position ouverte;
un canal (126) s'étendant à travers le composant mobile (120, 120') entre les première et deuxième extrémités (122, 124;
un orifice de prélèvement (136, 136') s'étendant à travers le composant mobile (120, 120') entre le canal (126) et un côté du composant mobile (120, 120') qui est exposé à la chambre à vide (110) lorsque le composant mobile (120, 120') est dans la position fermée; et
un mécanisme de sollicitation (148) configuré pour solliciter le composant mobile (120, 120') dans la position fermée;
dans lequel, lorsque le composant mobile (120, 120') est dans la position fermée, la première extrémité (122) du composant mobile (120, 120') est en contact avec une paroi interne de la chambre à vide (110) pour dissuader le mouvement du gaz à l'intérieur et à l'extérieur du canal (126) au niveau de la première extrémité (122);
dans lequel, lorsque le composant mobile (120, 120') est dans la position ouverte, la première extrémité (122) du composant mobile (120, 120') n'est pas en contact avec la paroi interne de la chambre à vide (110);
dans lequel l'orifice de prélèvement (136, 136') permet au gaz de passer de sorte que, lorsqu'un vide est aspiré dans la chambre à vide (110) et que l'orifice (114) est mis en prise par un objet (156), une pression sur la deuxième extrémité (124) du composant mobile (120, 120') est réduite pour venir à bout d'une force du mécanisme de sollicitation (148) et amener le composant mobile (120, 120') à se déplacer, de manière passive, de la position fermée à la position ouverte.

2. Collecteur à vide (100) selon la revendication 1, dans lequel une ou plusieurs dimensions de l'orifice de prélèvement (136, 136') sont sélectionnées sur la base d'un débit de gaz prédéterminé autorisé à passer par l'orifice de prélèvement (136, 136') lorsque le composant mobile (120, 120') est dans la position fermée.

3. Collecteur à vide (100) selon l'une quelconque des revendications précédentes, dans lequel le canal (126) s'étend dans une direction qui est sensiblement perpendiculaire à une direction dans laquelle l'orifice de prélèvement (136, 136') s'étend.

4. Collecteur à vide (100) selon l'une quelconque des revendications précédentes, dans lequel l'orifice de prélèvement (136, 136') comprend au moins l'un parmi une encoche (136) dans la première extrémité (122) du composant mobile (120, 120') et un trou débouchant (136') dans le composant mobile (120, 120').

5. Collecteur à vide (100) selon l'une quelconque des revendications précédentes, dans lequel le composant mobile (120, 120') a une forme cylindrique et le canal (126) est un trou débouchant dans le composant mobile (120, 120').

6. Collecteur à vide (100) selon la revendication 5, dans lequel la forme cylindrique du composant mobile (120, 120') a un profil à diamètre étagé de sorte qu'une première partie (128) du composant mobile (120, 120') qui comprend la première extrémité (122) a un premier diamètre, une seconde partie (130) du composant mobile (120, 120') qui comprend la deuxième extrémité (124) a un second diamètre, et le premier diamètre est inférieur au second diamètre.

7. Collecteur à vide (100) selon la revendication 6, dans lequel la seconde partie (130) du composant mobile (120, 120') comprend une troisième extrémité (132) opposée à la deuxième extrémité (124), et dans lequel la troisième extrémité (132) est exposée à un environnement ambiant, facultativement dans lequel la troisième extrémité (132) a un creux (134) qui s'étend autour de la première partie (128) du composant mobile (120, 120') et dans lequel le creux (134) est couplé, par communication, à l'environnement ambiant via un canal de référence (150).

8. Collecteur à vide (100) selon l'une quelconque des revendications 6 à 7, dans lequel le composant mobile (120, 120') est configuré pour être positionné dans une partie du collecteur à vide (100) qui comprend un premier alésage (144) et un second alésage (146) avec la première partie (128) du composant mobile (120, 120') positionnée dans le premier alésage (144) et la seconde partie (130) du composant mobile (120, 120') positionnée dans le second alésage (146), dans lequel le premier diamètre est sélectionné pour limiter le passage du gaz entre la première partie (128) du composant mobile (120, 120') et le premier alésage (144), et dans lequel le second diamètre est sélectionné pour limiter le passage du gaz entre la seconde partie (130) du composant mobile (120, 120') et le second alésage (146).

9. Collecteur à vide (100) selon l'une quelconque des revendications précédentes, dans lequel le mécanisme de sollicitation (148) comprend un ressort de compression positionné entre l'orifice (114) et la deuxième extrémité (124) du composant mobile (120, 120').

10. Collecteur à vide (100) selon l'une quelconque des revendications précédentes, dans lequel une section transversale du canal (126) est inférieure à une section transversale d'une voie de passage de gaz dans l'orifice (114), facultativement dans lequel, lorsqu'un composant de mise en prise (158) est couplé à l'orifice (114) et que le composant de mise en prise (158) a une voie de passage de gaz (160), la section transversale du canal (126) est inférieure à une section transversale de la voie de passage de gaz (160) du composant de mise en prise (158).

11. Collecteur à vide (100) selon la revendication 1, dans lequel, lorsque l'objet (156) est dégagé de l'orifice (114), le mécanisme de sollicitation (148) est configuré pour déplacer le composant mobile (120, 120') de la position ouverte à la position fermée.

12. Collecteur à vide (100) selon l'une quelconque des revendications précédentes, comprenant en outre:
une pluralité d'orifices (114) couplés parallèlement à la chambre à vide (110), dans lequel la pluralité d'orifices (114) est exposée à l'atmosphère ambiant; et
une pluralité de vannes (118), dont chacune est une vanne (118) selon l'une quelconque des revendications précédentes, dans lequel chacune de la pluralité de vannes (118) est positionnée entre la chambre à vide (110) et l'un de la pluralité d'orifices (114);
dans lequel la pluralité de vannes (118) est configurée pour se déplacer entre les positions ouverte et fermée indépendamment les unes des autres.

13. Collecteur à vide (100) selon la revendication 12, dans lequel une ou plusieurs dimensions des orifices de prélèvement (136, 136') de la pluralité de vannes (118) sont sélectionnées sur la base d'un nombre de la pluralité de vannes (118);
facultativement, dans lequel le collecteur à vide (100) comprend en outre une pluralité de ventouses, dont chacune est couplée à l'un de la pluralité d'orifices (114);
facultativement en outre, dans lequel la pluralité de ventouses est formée soit de manière solidaire avec la pluralité d'orifices (114), soit est formée séparément de la pluralité d'orifices (114).

14. Collecteur à vide (100) selon l'une quelconque des revendications 12 à 13, dans lequel, pour chacune de la pluralité de vannes (118), une section transversale du canal (126) est inférieure à une section transversale d'une voie de passage de gaz dans un orifice (114) correspondant de la pluralité d'orifices (114).

15. Collecteur à vide (100) selon l'une quelconque des revendications 12 à 14, dans lequel le collecteur à vide (100) est couplé à une source de vide configurée pour aspirer le vide dans la chambre à vide (110).
